# EUROPEAN PATENT APPLICATION

(11) **EP 3 944 756 A1**
(43) Date of publication of application: **02.02.2022**
(21) Application number: 21176310.7
(22) Date of filing: 27.05.2021
(51) Int. Cl.: A01G 24/28, A01G 24/10, A01G 24/23, A01G 24/20, C05F 11/00

(54) **GROWING MEDIUM**

(30) Priority: 30.07.2020 PL 43485420
(71) Applicant: Sobex sp. z o.o., 66-530 Drezdenko (PL)
(72) Inventor: Sobota, Wladyslaw, 66-415 Klodawa (PL); Zawadzinska, Agnieszka, 72-003 Wolczkowo (PL)
(74) Representative: AOMB Polska Sp. z.o.o.

(57) **Abstract**

The invention refers to a growing medium with a reduced high peat content in relation to commercially available media. The medium comprises compost that is enriched with nutrients, humus and unique components, such as low-moor peat, composted pine bark, wood fiber, sand, coniferous sawdust, lightweight construction aggregate. The medium is suitable to use as an all-purpose substrate for ornamental plants, a substrate for balcony plants, a substrate for conifers and for lawns. The invention also relates to a method for manufacturing such a medium.

## Description

### Field of technology

The invention relates to growing medium with a reduced high peat content in comparison to commercially available substrates. The medium contains compost that is rich in nutrients, humus, and also unique components, such as: low-moor peat, composted pine bark, wood fibre, sand, coniferous sawdust and lightweight construction aggregate. The medium is suitable for use as an all-purpose substrate for ornamental plants, a substrate for balcony plants, a substrate for conifers and a substrate for lawns. The invention also relates to a method for producing such a medium.

### Prior art

In the cultivation of garden plants, the soil is the most important factor for proper plant growth. It is the root growth environment from which plants absorb water and nutrients and through which they maintain vertical growth. For proper plant growth it is necessary to ensure optimum physical and chemical properties of the substrate.

In horticultural production the basic substrate or component for the production of substrates is high peat. It has unique physicochemical properties and is phytosanitary desirable. The EU market is estimated to consume approximately 34.609 bcm of peat (2013). In recent years, in accordance with a directive from the European Commission, restrictions are being placed on its use (mainly for environmental reasons) and other components are being sought to replace high peat in horticultural crops. This is especially evident in hobby gardening where there is a strong emphasis on using materials to replace peat. Pro-ecological trends and the need for a healthy lifestyle in developed societies have resulted in an increasing need to grow crops in organic substrates, using natural fertilizers. The growing medium used in modern horticulture are becoming increasingly specialized and more demanding in terms of the raw materials used to produce them.

The most important stage in the process of producing growing medium is the composting stage. Composting is the autothermic and thermophilic biological decomposition of selectively collected bio-waste by micro- and macro-organisms, in the presence of oxygen and under controlled conditions, leading to the production of compost. These waste is generally characterized by high organic content and high moisture content. Both these characteristics mainly determine the recyclability of this group of waste. Bio-waste compost can be described as a stable, sanitary safe material, rich in organic matter with a humus-like appearance and without unpleasant odours.

In the prior art there are known ways of producing composts in heaps, containers and biostimulators. The advantages of composting in heaps are primarily low investment costs and plain technology. The way compost heaps are formed is important for optimizing the biothermal processes occurring in compost heaps. The material in the heap is applied in layers, shuffling substances that are difficult to decompose with those that are easy to decompose, and then covered with a material that allows to maintain uniform humidity level in the mass. Every 4-6 weeks the mass is shuffled and the oxygen necessary for the process is supplied. This speeds up the mineralization process, allows for the continuous removal of excess water from the compost, and allows for the biological activity of organisms that decompose organic substances. However, due to the variety of materials used in composting and their different proportions, it is difficult to determine the exact chemical composition of these organics.

However, it unexpectedly turned out that all these needs, and many others, are met by composition according to the subject invention.

### The essence of the invention

The subject of the invention is growing medium enriched with compost and comprising low-moor peat, composted pine bark, wood fiber, coniferous sawdust, lightweight construction aggregate, and sand, and comprising from about 0 to about 25% by volume of high peat.

In a preferred embodiment, the growing medium comprises from about 30 to about 35% by volume of low-moor peat.

In a particularly preferred embodiment, the growing media from about 10 to 40% by volume of compost.
Advantageously, the growing medium comprises from about 0 to about 30% of at least one component, selected from the group that includes composted pine bark, wood fiber, coniferous sawdust, lightweight construction aggregate and sand.

Preferably, the growing medium have a pH ranging from about 5.0 to about 6.8.

In a preferred embodiment, the growing medium comprises compost which contains spent mushroom substrate, fruit and vegetable waste and at least one component, selected from the group consisting of uncomposted pine bark, rye straw, paper pulp, coniferous sawdust and wood fiber. Preferably, the growing medium comprise compost, in which spent mushroom substrate comprises from about 22 to about 58% (DM- dry matter). Advantageously, the growing medium comprise compost, in which fruit and vegetable waste constitutes from about 17 to about 39% (DM).

Preferably, the growing medium comprises compost containing (% DM).:
- about 22% of spent mushroom waste,
- about 39% of fruit and vegetable waste,
- about 33% of uncomposted pine bark,
   - about 6% of rye straw.

Preferably, the growing medium comprises compost containing (% DM).:
- about 58% of spent mushroom waste,,
- about 17% of fruit and vegetable waste,
- about 8.5% of paper pulp,
- about 6.5% of coniferous sawdust,
- about 10% of wood fiber.

Preferably, the growing medium comprises compost containing (% DM).:
- about 30% of spent mushroom waste,
- about 30% of fruit and vegetable waste,
- about 20% of of uncomposted pine bark,
- about 5% of coniferous sawdust,
- about 15% of wood fiber.

The object of the invention is also the growing medium with pH ranging from about 5.0 to about 6.0 and comprising (% by volume):
- about 10% of compost,
- about 20% of high peat,
- about 30% of low-moor peat,
- about 30% of uncomposted pine bark,
- about 10% of sand,
which is dedicated as a substrate for coinfers.

The object of the invention is also the growing medium with pH ranging from about 5.5 to about 6.8 and comprising (% by volume):
- about 30% of compost,
- about 20% of high peat,
- about 30% of low-moor peat,
- about 10% of lightweight construction aggregate,
- about 10% of wood fiber,
which is dedicated as a universal substrate for ornamental plants.

The object of the invention are also the growing medium with pH ranging from about 5.8 to about 6.8 and comprising (% by volume):
- about 25% of compost,
- about 15% of high peat,
- about 35% of low-moor peat,
- about 10% of uncomposted pine bark,
- about 5% of lightweight construction aggregate,
- about 10% of sand,
which is dedicated as a substrate for lawns.

The object of the invention is also the growing medium with pH ranging from about 5.5 to about 6.5 and comprising (% by volume):
- about 40% of compost,
- about 20% of high peat,
- about 30% of low-moor peat
- about 5% of lightweight construction aggregate
- about 5% of sand,
which is dedicated as a substrate for balcony plants.

The object of the invention is also a method of producing the growing medium, enriched in compost and comprising low-moor peat, composted pine bark, wood fiber, coniferous sawdust, lightweight construction aggregate and sand, and comprising from about 0 to about 25% by volume of high peat, wherein the substrate and compost in the batch preparation stage are produced by precisely dispensing the specified ingredients into a mixer and then mixing them until homogeneity is achieved.

### Advantages of the invention

Growing medium, according to the invention, have properties that guarantee optimal plant growth. Plants grown in the produced medium will have more favourable aesthetic qualities in terms of: correct proportions and compact habit, abundant foliation and intensive greening of the leaves, size of the fresh weight of the aboveground parts, abundant flowering in the case of ornamental plants with flowers and generally healthy appearance.

The product according to the invention also has parameters favourable from the point of view of use by the consumer: granular structure, odorlessness, temperature close to ambient temperature, pH value in the range from about 5.0 to about 6.8 (depending on the product variant); loose form, fraction from about 0 to about 40 mm, salinity level < about 3.0 g NaCl dm⁻³ (depending on the product variant), absence of eggs of intestinal parasites (*Ascaris* sp., *Trichuris* sp. and *Toxocara* sp.) and bacteria of the genus *Salmonella* sp. The product with the parameters indicated above will be fully usable by individual consumers who are not specialists in the chemical industry (so-called DIY consumers).

The product, according to the invention, is also an eco-innovative product. It contains a reduced (reduction even by about 50%, depending on the production variant) amount of raw material - high peat (a natural good, the deposits of which are limited in quantity) and reused raw materials (waste from fruit and vegetable industry, paper production and coniferous bark, spent mushroom substrate), thanks to which the burden of production waste on the environment will be reduced.

### Detailed description of the invention

The high quality of plants obtained as a result of cultivation in properly prepared media is an overriding need demonstrated by potential users of the product. In addition, a feature desired by consumers is the use of ecologically acceptable renewable raw materials.

The peat-reduced medium of the invention meets the expectations of the society. It is based on a natural product - compost made from organic matter, which meets all the requirements of the legislator.

Depending on the destination group, the range of the proportion of high peat, composts and other components was assumed in the following ranges:
- Amount of high peat: about 0-25%:
   - A substrate for conifers (estimated proportion: about 0-25%; reduction of about 25-50% in relation to currently known formulations)
   - An universal substrate for ornamental plants (estimated proportion: about 0-20%, reduction of about 12-32% in relation to currently known formulations)
   - A substrate for lawns (estimated proportion: about 0-15%; reduction of about 10-25% from currently known formulations).
   - Substrate for balcony plants (estimated proportion: about 0-25%, reduction of about 20-45% in relation to currently known formulations).
- The amount of waste or compost in the composition of the medium in different production variants: about 10-40%.
- The amount of other components (excluding peat and waste/compost): about 5-60%

During the preparation of specific formulations, the chemical composition of the components was analyzed, and they were combined into mixtures in such a way that the final carbon to nitrogen ratio by weight was in the range of about 20-30:1

The range of four media based on compost and reduced peat is a dry mixture of components combined in volume proportions, with known volume weights of individual components and products. In the process of developing the composition of media, the principle guiding the composition of mixtures was to provide as many nutrients as possible from the compost mass and to minimize or eliminate the need to supplement the nutrients with mineral fertilizers. Inappropriate choice of the amount of components, especially composts, which can be a source of excessive salinity of the medium, leads in plants to disorders in absorption of nutrients from the medium, damage to the root system, a decrease in green mass growth, and in extreme cases threatens physiological drought and death of the plant.

In addition, the compost production technology, although based on the traditional heaping method, was modified. To prepare the batch of compost mixtures, a mixing machine (B&C, Italy) was used which, thanks to its specialized design and software, enabled the components to be combined in strictly defined proportions, on a dry matter basis, resulting in a product with highly unique properties. Thorough mixing of compost components was favourable to homogenization of the composted mixture and shortened the process to 5 months.

During the maturation process, the moisture content of the heap and the temperature inside were controlled using thermometers and heap- moisture metres. Composts with moisture content higher than about 70% were turned and aerated using a set of mechanical devices (sifter), while those with moisture content lower than about 60% were wetted with water. Monthly physical and chemical tests allowed controlling the course of the decomposition process.

Thanks to the use of the technology of precise mixing of organic matter, the process of maturation and obtaining homogeneous organic substance fulfilling the following criteria was accelerated already at the beginning of the process: earthy structure, odourless product, temperature close to ambient temperature, C:N (carbon to nitrogen) ratio close to ca. 20-30:1, pH value within the range of ca. 6.0-8.0; absence of eggs of intestinal parasites (*Ascaris* sp. *Trichuris* sp. and *Toxocara* sp.) and bacteria of the genus *Salmonella* sp., level of heavy metals below critical values included in the Polish legislation (Regulation of the Minister 2008).

The same technology, of precise mixing of compost components, is also used at the stage of production of final product with strictly specified parameters and purpose.

The technological process begins with filling the feed tanks with feed material, in types corresponding to the requirements of the current recipe. According to the recipe, the system opens the respective feeding tanks, releasing a quantity (by volume) of material into a conveyor belt that, as it moves, accumulates the individual components in layers. The amount of components obtained in this way goes to the drum mixer, where it is precisely mixed to obtain homogeneity. Finally, the product is obtained in the form of compost mixture or already finished product.

According to the invention, the word "about/approx." used above and below is to be understood as a deviation of +/- 5% from the stated value, reflecting inaccuracies that may occur during the conduct of the process, the manufacture of the composition according to the invention, for example during the measurement of the ingredients.

### Working examples

The subject of the patent application are developed medium recipes based on composts with strictly defined composition and dry matter batch. The range of four media with reduced high peat content includes three, selected from four composts with varying batches.

The composition of these media was developed for four applied plant groups. Compost mixtures of the following composition were used to prepare the media, which were mixed on a mixing machine and composted in a traditional heap for about 5 months:
- Compost A (% DM) - about 22% of spent mushroom substrate, about 39% of fruit and vegetable waste, about 33% of uncomposted pine bark, about 6% of rye straw;
- Compost B (% DM) - about 58% of spent mushroom substrate, about 17% of fruit and vegetable waste, about 8.5% of paper pulp, about 6.5% of coniferous sawdust, about 10% of wood fiber;
- Compost C (% DM) - about 30% of spent mushroom substrate, about 30% of fruit and vegetable waste, about 20% of uncomposted pine bark, about 5% of coniferous sawdust, about 15% of wood fiber.

It was assumed that according to the requirements of the plants, the physical and chemical parameters of the media would be strictly narrowed to those described below.

### Example 1 - Growing medium for conifers

According to the invention, the pH value of the medium is in the range of about 5.0 to about 6.0; the NaCl salt concentration < about 20 g dm⁻³; and the medium is in loose solid form with a fraction of about 0-40 mm. It constitutes a dry mixture of components, in which the content of high peat does not exceed about 25%. It is obtained on a mixing line by combining the following components in a volume ratio:
- about 10% of compost B,
- about 20% of high peat (pH 3.8; 32% DM),
- about 30% of low-moor peat (pH 5.2; 33% DM),
- about 30% of composted pine bark (pH 3.8; 46% DM),
- about 10% of sand (pH 6.4; 95% DM).

Medium parameters in laboratory and industrial scale studies are in the range of: dry matter about 55-62%; bulk density - about 0.42 g cm⁻³; total porosity about 81.7% by volume.

Particle fractions: > 20 mm - approx. 0-5%; 10-20 mm - approx. 8-13%; 5-10 mm - approx. 10-26%; 2-5 mm - approx. 16-26%; 1-2 mm - approx. 20-21%; < 1 mm - approx. 15-41%.

Increasing the pH value of the medium can be achieved with a neutralization curve, using agricultural lime. Depending on plant requirements, the absorbable nitrogen can be supplemented with a mineral fertilizer such as ammonium nitrate.

### Example 2 - Universal growing medium for ornamental plants

According to the invention, the pH value of the medium is in the range of about 5.5 to about 6.8; the NaCl salt concentration < about 2.5 g dm⁻³; and the medium is in loose solid form with a fraction of about 0-40 mm. It constitutes a dry mixture of components, in which the content of high peat does not exceed about 20%. It is obtained on a mixing line by combining the following components in a volume ratio:
- about 30% of compost A,
- about 20% of high peat (pH 3.8-4.3; 32-65% DM)
- about 30% of low-moor peat (pH 5.2; 33-54% DM)
- about 10% of lightweight construction aggregate (pH 7.8-8.0; 79-83% DM),
- about 10% of wood fiber (pH 5.1; 54-93% DM),

Medium parameters in laboratory and industrial scale studies are in the range of: dry matter about 48-49%; bulk density - about 0.3-0.4 g cm⁻³; total porosity about 83-88% by volume.

Particle fractions; > 20 mm - approx. 0-3%; 10-20 mm - approx. 11-13%; 5-10 mm - approx. 26-31%; 2-5 mm - approx. 36-41%; 1-2 mm - approx. 9-21%; < 1 mm - approx. 4-41%.

Increasing the pH value of the medium can be achieved with a neutralization curve, using agricultural lime in an amount of 1-2 kg m⁻³ of medium. Depending on plant requirements, the absorbable nitrogen can be supplemented with a mineral fertilizer such as ammonium nitrate in an amount of about 0.5-1.5 kg m⁻³ of medium.

### Example 3 - Growing medium for lawns

According to the invention, the pH value of the medium is in the range of about 5.8 to about 6.8; the NaCl salt concentration < about 2.0 g dm⁻³; and the medium is in loose solid form with a fraction of about 0-40 mm. It constitutes a dry mixture of components, in which the content of high peat does not exceed about 15%. It is obtained on a mixing line by combining the following components in a volume ratio:
- about 25% of compost C,
- about 15% of high peat (pH 3.8; 32% DM),
- about 35% of low-moor peat (pH 5.2; 33% DM)
- about 10% of composted pine bark (pH 3.8; 46% DM),
- about 5% of lightweight construction aggregate (pH 7.8-8.0; 79-83% DM),
- about 10% of sand (pH 6.4; 95% DM),

Medium parameters in laboratory and industrial scale studies are in the range of: dry matter about 61%; bulk density - about 0.4-0.5 g cm⁻³; total porosity about 80-82% by volume.

Particle fractions: > 20 mm - approx. 0.5-2%; 10-20 mm - approx. 6-18%; 5-10 mm - approx. 10-40%; 2-5 mm - approx. 24-31%; 1-2 mm - approx. 7-25%; < 1 mm - approx. 2-34%.

Increasing the pH value of the medium can be achieved with a neutralization curve, using agricultural lime in an amount of 1-3 kg m⁻³ of medium. Depending on plant requirements, the absorbable nitrogen can be supplemented with a mineral fertilizer such as ammonium nitrate in an amount of about 0.5-1.0 kg m⁻³ of medium.

### Example 4 - Growing medium for balcony plants

According to the invention, the pH value of the medium is in the range of about 5.5 to about 6.5; the NaCl salt concentration < 3.0 g dm⁻³; and the medium is in loose solid form with a fraction of about 0-40 mm. It constitutes a dry mixture of components, in which the content of high peat does not exceed about 25%. It is obtained on a mixing line by combining the following components in a volume ratio:
- about 40% of compost C,
- about 20% of high peat (pH 3.8; 32 % DM)
- about 30% of low-moor peat (pH 5.2; 33 % DM)
- about 5% of lightweight construction aggregate (pH 7.8-8.0; 79-83 % DM)
- about 5% of sand (pH 6.4; 95 % DM)

Medium parameters in laboratory and industrial scale studies are in the range of: dry matter about 49-53%; bulk density - about 0.3-0.4 g cm⁻³; total porosity about 83-85% by volume.

Particle fractions: > 20 mm - approx. 0-3%; 10-20 mm - approx. 3-12%; 5-10 mm - approx. 14-20%; 2-5 mm - approx. 26-39%; 1-2 mm - approx. 24-27%; < 1 mm - approx. 11-25%.

Increasing the pH value of the medium can be achieved with a neutralization curve, using agricultural lime in an amount of about 1-2 kg m⁻³ of medium. Depending on plant requirements, the absorbable nitrogen can be supplemented with a mineral fertilizer such as ammonium nitrate in an amount of about 0.5-1.5 kg m⁻³ of medium.

## Claims

1. A growing medium that is enriched in compost and contains low-moor peat, composted pine bark, wood fiber, coniferous sawdust, lightweight construction aggregate and sand, **characterised in that** it comprises from about 0 to about 25% by volume of high peat.

2. The growing medium according to claim 1, **characterised in that** it contains from about 30 to about 35% by volume of low-moor peat.

3. The growing medium according to claim 1 or 2, **characterised in that** it contains from about 10 to about 40% by volume of compost.

4. The growing medium according to any of claims 1 to 3 **characterised in that** is contains from about 0 to about 30% of at least one component, selected from the group consisting of composted pine bark, wood fiber, coniferous sawdust, lightweight construction aggregate and sand.

5. The growing medium according to any of claims 1 to 4, **characterized in that** it has a pH ranging from about 5.0 to about 6.8.

6. The growing medium, according to any of claims 1 to 5, **characterised in that** it includes compost, that comprises a spent mushroom waste, fruit and vegetable waste and at least one component, selected from the group consisting of uncomposted pine bark, rye straw, paper pulp, coniferous sawdust and wood fiber.

7. The growing medium according to any of claims 1 to 6, **characterised in that** it contains compost, in which spent mushroom waste constitutes from about 22 to about 58% of dry matter or compost, in which fruit and vegetable waste constitutes from about 17 to about 39% of dry matter.

8. The growing medium, according to any of claims 1 to 8, **characterised in that** it contains compost with (% of dry matter):
about 22% of spent mushroom substrate,
about 39% of fruit and vegetable waste,
about 33% of uncomposted pine bark,
about 6% of rye straw.

9. The growing medium, according to any of claims 1 to 9, **characterised in that** it contains compost with (% of dry matter):
about 58% of spent mushroom substrate,
about 17% of fruit and vegetable waste,
about 8.5% of paper pulp,
about 6.5% of coniferous sawdust,
about 10% of wood fiber.

10. The growing medium according to any of claims 1 to 10, **characterised in that** it contains compost with (% of dry matter):
about 30% of spent mushroom substrate,
about 30% of fruit and vegetable waste,
about 20% of uncomposted pine bark,
about 5% of coniferous sawdust,
about 15% of wood fiber

11. The growing medium, according to any of claims 1 to 11, **characterised in that** its pH value is in range from about 5.0 to about 6.0 and it comprises (% by volume):
about 10% of compost,
about 20% of high peat,
about 30% of low-moor peat,
about 30% of composted pine bark,
about 10% of sand,
which is dedicated as a substrate for conifers.

12. The growing medium, according to any of claims 1 to 12, **characterised in that** its pH value is in range from about 5.5 to about 6.8 and it comprises (% by volume):
about 30% of compost,
about 20% of high peat,
about 30% of low-moor peat,
about 10% of lightweight construction aggregate,
about 10% of wood fiber,
which is dedicated as a universal substrate for ornamental plants.

13. The growing medium, according to any claims 1 to 13, **characterised in that** its pH value is in range from about 5.8 to about 6.8 and it comprises (% by volume):
about 25% of compost,
about 15% of high peat,
about 35% of low-moor peat,
about 10% of composted pine bark,
about 5% of lightweight construction aggregate,
about 10% of sand,
which is dedicated as a substrate for lawns.

14. The growing medium, according to any of claims 1 to 14, **characterised in that** its pH value is in range from about 5.5 to about 6.5 and comprises (% by volume):
about 40% of compost,
about 20% of high peat,
about 30% of low-moor peat,
about 5% of lightweight construction aggregate,
about 5% of sand,
which is dedicated as a substrate for balcony plants.

15. A method for producing a growing medium enriched with compost and containing low-moor peat, composted pine bark, wood fiber, coniferous sawdust, lightweight construction aggregate and sand, and containing from about 0 to about 25% by volume of high peat, **characterized in that** the medium and compost in the batch preparation stage are produced by precisely dispensing the specified ingredients into a mixer and then mixing them until homogeneity is achieved.
